**Europäisches Patentamt**

**European Patent Office**

**Office européen des brevets**

(19)

(11) Veröffentlichungsnummer: **0 046 163**
A1

# EUROPÄISCHE PATENTANMELDUNG

(21) Anmeldenummer: **81102615.2**

(22) Anmeldetag: **07.04.81**

(51) Int. Cl.³: **H 02 G 15/117**

(30) Priorität: **16.08.80 DE 8021913 U**

(43) Veröffentlichungstag der Anmeldung: **24.02.82**
**Patentblatt 82/8**

(84) Benannte Vertragsstaaten: **AT BE CH FR IT LI LU NL SE**

(71) Anmelder: **KRONE GmbH, Goerzallee 311,
D-1000 Berlin 37 (DE)**

(72) Erfinder: **Forberg, Horst, Rätikonweg 9a,
D-1000 Berlin 42 (DE)**
Erfinder: **Achtnig, Klaus-Peter, Ostpreussendamm 106a,
D-1000 Berlin 45 (DE)**
Erfinder: **Radelow, Wolfgang, Stubenrauchstrasse 2C,
D-1000 Berlin 47 (DE)**
Erfinder: **Müller, Manfred, Schwedenstrasse 3a,
D-1000 Berlin 65 (DE)**

(74) Vertreter: **Patentanwälte Beetz sen. - Beetz jr. - Heidrich
- Timpe - Siegfried - Schmitt-Fumian,
Steinsdorfstrasse 10, D-8000 München 22 (DE)**

(54) **Kabelverbindungsmuffe mit Überspannungsschutz.**

(57) Gegenstand der Erfindung ist eine Kabelverbindungsmuffe mit Überspannungsschutz für Fernmeldenetze, die aus einem beidendig geschlossenen Muffengehäuse mit axialen Kabeleinführungen sowie aus im Muffeninnenraum befestigten Anschlußleisten für die Kabeladern besteht. Um eine vergrößerte Anzahl an Kabeladern ohne Vergrößerung der Außenabmessungen anschließen zu können, und gleichzeitig eine höhere Stoßstromfestigkeit zu erhalten, sind die einzelnen Anschlußleisten in mehreren Doppelreihen hintereinander im Muffeninnenraum angeordnet und jeweils reihenweise in je einer Wanne festgelegt, was eine kreuzungsfreie Verdrahtung und eine vergrößerte Anzahl an Anschlüssen ergibt. Die Aufnahmewannen (2, 2a) sind jeweils paarweise mit ihren Böden aneinandergeschraubt und an seitlichen Verbindungsschienen (4) befestigt. Diese Verbindungsschienen (4) wiederum sind mechanisch und elektrisch über Tragschienen (6) mit einer der Stirnwände des Muffengehäuses (1) sowie über ein Erdungskabel mit einem Anschlußbolzen (5) verbunden. Ferner sind auf den einzelnen Anschlußleisten jeweils Überspannungsableiter-Magazine (8) lösbar z. B. durch Klemmsitz befestigt.

0046163

## Kabelverbindungsmuffe mit Überspannungsschutz

Die Erfindung betrifft eine Kabelverbindungsmuffe mit Überspannungsschutz für Fernmeldenetze, bestehend aus einem beidendig geschlossenen Muffengehäuse mit axialen Kabeleinführungen und aus im Muffeninnenraum befestigten Anschlußleisten für die Kabeladern.

Es sind bereits Kabelverbindungsmuffen mit Überspannungsschutz in verschiedenen Ausführungen bekannt, bei denen die Kabel bereits im Werk angeschlossen sind, und bei denen die Überspannungsableiter auf Leiterplatten 17, die in Steckerleisten eingesteckt werden, sitzen. Bedingt durch den vergleichsweise kleinen Leiterquerschnitt ist die Stoßstromfestigkeit bei diesen Ausführungen jedoch relativ gering.

125-(x 2135)-Sd-E

- 2 -

Darüber hinaus müssen beim Einbau einer derartigen Überspannungsschutzmuffe in ein Erdkabel zum Anschluß der beiden Erdkabelenden mit den aus der Muffe herausgeführten Kabelenden zwei zusätzliche Verbindungsmuffen verwendet werden, was erhebliche Mehrkosten verursacht.

Schließlich ist auch die Anzahl an anzuschließenden Kabeladern bei diesen Muffenausführungen ungenügend.

Aufgabe der Erfindung ist es, eine Kabelverbindungsmuffe mit Überspannungsschutz zu schaffen, bei welcher die beiden Erdkabelenden direkt an den Anschlußleisten angeschlossen werden können, und die bei üblicher Baugröße den Anschluß einer größeren Anzahl an Doppeladern ermöglicht.

Erfindungsgemäß wird diese Aufgabe dadurch gelöst, daß im Muffeninnenraum an jeder Seite einer Mittellängsebene jeweils mehrere Reihen von Anschlußleisten in Längsrichtung hintereinander vorgesehen sind, daß jeweils eine Reihe der Anschlußleisten in einer Aufnahmewanne befestigt ist, und daß die Aufnahmewannen jeweils paarweise mit ihren Böden aneinander sowie an seitlichen Verbindungsschienen befestigt sind, die mechanisch und elektrisch über Tragschienen verbunden sind.

Durch die erfindungsgemäße Ausbildung des im Muffengehäuse aufgenommenen Bausatzes, und zwar insbesondere durch die Längsanordnung der Anschlußleisten in mehreren im Muffengehäuse hintereinander vorgesehenen

- 3 -

0046163

Reihen, ergibt sich die Möglichkeit einer kreuzungsfreien Verdrahtung. Zusätzlich kann die Aufnahmekapazität, d. h. die Anzahl an anzuschließenden Doppeladern, einer erfindungsgemäßen Kabelverbindungsmuffe mit Überspannungsschutz gegenüber bekannten Ausführungen um ca. 50 % vergrößert werden.

Gemäß einer zweckmäßigen Weiterbildung der Erfindung sind die Überspannungsableiter in Form von Magazinen ausgebildet und können z. B. durch Steckverbindungen lösbar an den Anschlußleisten befestigt werden.

Die Stoßstromfestigkeit konnte aufgrund der verwendeten Anschlußleisten von 4 kA auf 10 kA bei einer Wellenform 8/20 erhöht werden.

Im folgenden wird ein Ausführungsbeispiel der Erfindung anhand der Zeichnung im einzelnen beschrieben. Es zeigen:

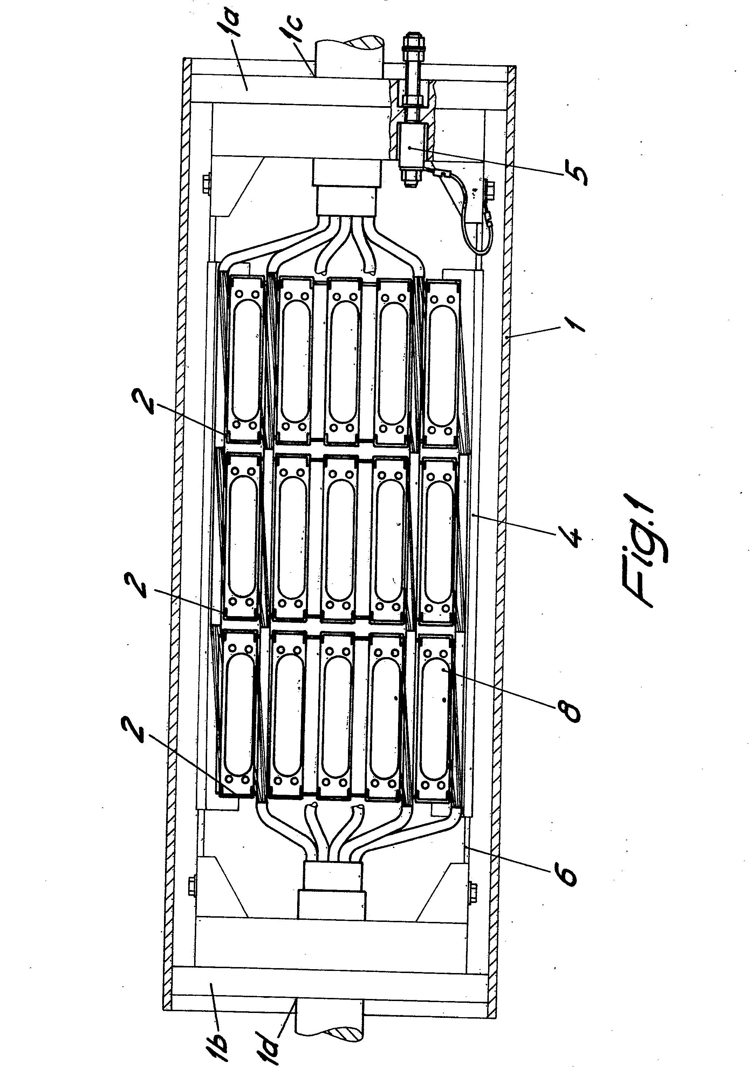

Fig. 1      eine Seitenansicht eines in einer im Längsschnitt dargestellten Muffe angeordneten Bausatzes;

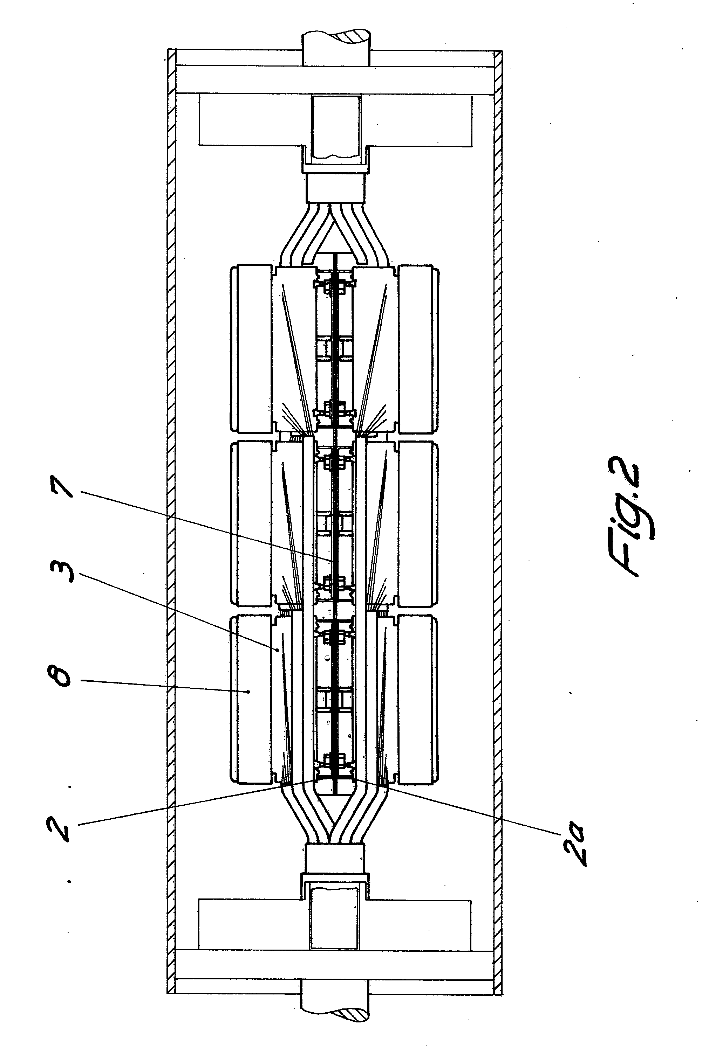

Fig. 2      den Bausatz mit Muffe nach Fig. 1 in Draufsicht;

Fig. 3      eine Stirnansicht der Muffe und des Bausatzes nach Fig. 1 bzw. 2.

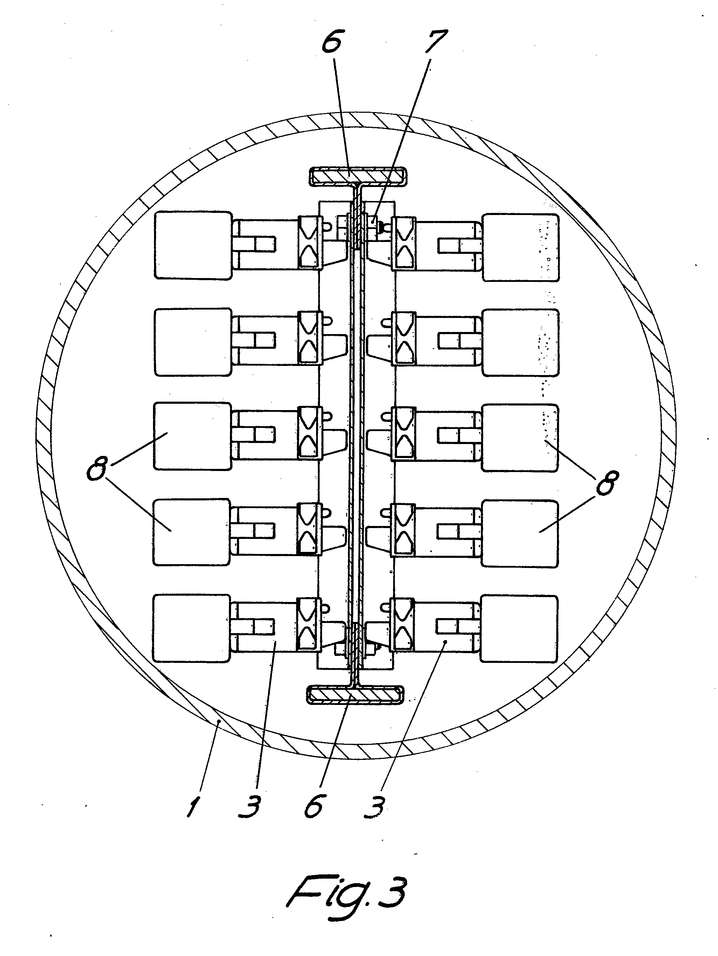

Die dargestellte Verbindungsmuffe besteht aus einem rohrförmigen Muffengehäuse 1 mit stirnseitigen Endplatten 1a, 1b und Kabeldurchführungen 1c, 1d. Im Muffengehäuse ist ein vormontierter Bausatz befestigt, der aus drei symmetrisch zu einer Mittellängsebene angeordneten Doppelreihen von Anschlußleisten 3 besteht, wobei die Anschlußleisten 3 jeder Reihe in je einer Wanne 2, 2a befestigt sind. Die Wannen 2, 2a jeder Reihe sind mit ihren Böden durch Schraubverbindungen 7 aneinander befestigt (Fig. 3).

Auf den einzelnen Anschlußleisten 3 ist ferner jeweils ein Überspannungsableiter-Magazin 8 lösbar aufgesteckt.

Die vormontierte Baugruppe ist im Innenraum des Muffengehäuses 1 durch längsverlaufende Tragschienen 6 festgelegt, welche mit seitlichen Verbindungsschienen 4 mechanisch und elektrisch verbunden sind, wobei der Anschluß für eine Erdung über ein Erdkabel erfolgt, welches zwischen einem Ende der Tragschiene und einem in der Stirnwand 1a festgelegten Anschlußbolzen vorgesehen ist.

Ein wesentlicher Vorzug der beschriebenen Kabelverbindungsmuffe mit Überspannungsschutz liegt darin, daß eine Vielzahl von handelsüblichen Bauteilen, z. B. Muffengehäusen, Anschlußleisten und Wannen, verwendet werden können, so daß sich der zusätzliche bauliche Aufwand zur Erzielung des Überspannungsschutzes in engen Grenzen hält.

0046163

Patentansprüche:
----------------

1. Kabelverbindungsmuffe mit Überspannungsschutz für Fernmeldenetze, bestehend aus einem beidendig geschlossenen Muffengehäuse mit axialen Kabeleinführungen und aus im Muffeninnenraum befestigten Anschlußleisten für die Kabeladern,
dadurch gekennzeichnet,
daß im Muffeninnenraum an jeder Seite einer Mittellängsebene jeweils mehrere Reihen von Anschlußleisten (3) in Längsrichtung hintereinander vorgesehen sind, daß jeweils eine Reihe der Anschlußleisten (3) in einer Aufnahmewanne (2, 2a) befestigt ist, und daß die Aufnahmewannen (2, 2a) jeweils paarweise mit ihren Böden aneinander sowie an seitlichen Verbindungsschienen (4) befestigt sind, die mechanisch und elektrisch über Tragschienen (6) mit den beiden stirnseitigen Verschlußplatten des Muffengehäuses verbunden sind.

2. Kabelverbindungsmuffe nach Anspruch 1,
dadurch gekennzeichnet,
daß an den Anschlußleisten (3) Überspannungs-Ableitermagazine (8) lösbar befestigt sind.

125-(x 2135)-Sd-E

Fig.1

0046163

0046163

Fig.2

0046163

Fig. 3

Europäisches
Patentamt

**EUROPÄISCHER RECHERCHENBERICHT**

0046163

Nummer der Anmeldung

EP 81 10 2615

| Kategorie | Kennzeichnung des Dokuments mit Angabe, soweit erforderlich, der maßgeblichen Teile | betrifft Anspruch |
|---|---|---|
| | <u>GB - A - 1 219 340</u> (QUANTE) | 1 |
| | * Seite 1, Zeile 58 - Seite 2, Zeile 76; Figuren 1-3 * | |
| | & DE - A - 1 690 784 | |
| | -- | |
| | <u>DE - A - 1 515 937</u> (KRONE) | 1 |
| | * Seite 2, Absatz 4; Seite 3, letzter Absatz; Seiten 4,5; Figur 1 * | |
| | -- | |
| | <u>DE - U - 7 911 860</u> (SCHMIDT) | 1,2 |
| | * Anspruch 1; Figuren 1-3 * | |
| | -- | |
| | <u>GB - A - 2 017 428</u> (KRONE) | 1,2 |
| | * Seite 1, Zeile 121 - Seite 2, Zeile 52; Figuren 1-4 * | |
| | & DE - A - 2 811 812 | |
| | -- | |
| | <u>US - A - 2 437 358</u> (MOWERY) | 1 |
| | * Spalte 1, Zeile 54 - Spalte 3, Zeile 51; Figuren 1-6 * | |
| | -- | |
| P | <u>DE - U - 8 021 913</u> (KRONE) | 1,2 |
| | * Insgesamt * | |
| | ---- | |

**EINSCHLÄGIGE DOKUMENTE**

**KLASSIFIKATION DER ANMELDUNG (Int. Cl.³)**

H 02 G 15/117

**RECHERCHIERTE SACHGEBIETE (Int. Cl.³)**

H 02 G 15/117
        15/076
        15/16
H 04 Q  1/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-11-1981 | LOMMEL |

EPA form 1503.1  06.78